**Europäisches Patentamt**

**European Patent Office**

**Office européen des brevets**

(11) Veröffentlichungsnummer : **0 057 910 B2**

(12) **NEUE EUROPÄISCHE PATENTSCHRIFT**

(45) Veröffentlichungstag der neuen Patentschrift :
**18.03.92 Patentblatt 92/12**

(21) Anmeldenummer : **82100783.8**

(22) Anmeldetag : **04.02.82**

(51) Int. Cl.⁵ : **H02M 3/335**

(54) **Schaltung zur geregelten Speisung eines Verbrauchers.**

Die Akte enthält technische Angaben, die nach
dem Eingang der Anmeldung eingereicht
wurden und die nicht in dieser Patentschrift
enthalten sind.

(30) Priorität : **05.02.81 DE 3103863**
**24.03.81 DE 3111432**
**09.11.81 DE 3144486**

(43) Veröffentlichungstag der Anmeldung :
**18.08.82 Patentblatt 82/33**

(45) Bekanntmachung des Hinweises auf die
Patenterteilung :
**09.10.85 Patentblatt 85/41**

(45) Bekanntmachung des Hinweises auf die
Entscheidung über den Einspruch :
**18.03.92 Patentblatt 92/12**

(84) Benannte Vertragsstaaten :
**AT BE CH DE FR GB IT LI LU NL SE**

(56) Entgegenhaltungen :
**EP-A- 0 027 171**
**EP-A- 0 030 026**
**EP-A- 0 030 276**
**DE-A- 1 613 032**

(56) Entgegenhaltungen :
**DE-A- 2 014 377**
**FR-A- 2 371 814**
**GB-A- 1 010 304**
**GB-A- 2 000 394**
**US-A- 3 133 208**
**US-A- 3 155 843**
**US-A- 3 869 657**
**US-A- 3 911 352**
**US-A- 4 005 351**
**US-A- 4 131 843**
**US-A- 4 183 080**
**Applikationsbuch Band 2, Verlag Texas Instrument Deutschland,Seiten 125-135.**

(73) Patentinhaber : **Braun Aktiengesellschaft**
**Rüsselsheimer Strasse 22**
**W-6000 Frankfurt/Main (DE)**

(72) Erfinder : **Bergk, Günther**
**Lahnstrasse 4**
**W-6096 Raunheim (DE)**
Erfinder : **Schwarz, Gerhard**
**Eggestrasse 16**
**W-5990 Altena 1 (DE)**

(74) Vertreter : **Einsele, Rolf**
**Braun Aktiengesellschaft Postfach 1120**
**Frankfurter Strasse 145**
**W-6242 Kronberg Taunus (DE)**

EP 0 057 910 B2

## Beschreibung

Die Erfindung betrifft eine Schaltungsanordnung zur geregelten Speisung eines Gleichstromverbrauchers geringerer Verbraucherspannung mit konstantem Strom aus Eingangsgleichspannungsquellen unterschiedlicher Spannung unter Verwendung eines selbstschwingenden Sperrwandlers.

Bei transportfähigen elektrischen und elektronischen Geräten ist es erwünscht, daß sie in verschiedenen Spannungen betrieben werden können oder falls sie Akkumulatoren aufweisen, daß diese Akkumulatoren an verschiedenen Spannungen aufladbar sind. Beispielsweise werden elektrische Trockenrasierapparate, Elektronenblitzgeräte, tragbare Rundfunkempfangsgeräte, o. dgl. oft auf Auslandsreisen mitgenommen und dann in den jeweiligen Ländern mit unterschiedlichen Netzspannungen betrieben. Diese Netzspannungen variieren in der Regel einerseits zwischen 110 Volt und 240 Volt und andererseits zwischen 50 Hz und 60 Hz.

Für die Anpassung der Kleingeräte bzw. Akkumulatoren an die verschiedenen Spannungen ist eine Spannungstransformation erforderlich, die kapazitiv oder induktiv durchgeführt werden kann.

Aus der DE-A-20 14 377 ist eine Transistor-Wandlerschaltung bekannt, mit deren Hilfe aus einer Netzwechselspannung zum einen ein Ladestrom für einen Akkumulator und zum anderen ein höherer Gleichstrom für den Antrieb eines Motors erzeugt werden kann. Hierbei ist ein hochfrequent betriebener Durchflußwandler mit sättigbarem Kern vorgesehen, der primärseitig an die gleichgerichtete Netzspannung angeschlossen ist und sekundärseitig die gewünschten Ströme liefert. Die bekannte Schaltung läßt sich nur an einer bestimmten Netzspannung betreiben, paßt sich also nicht automatisch an unterschiedliche Spannungen an. Da der Kern des Wandlers jeweils in die Sättigung gelangt, ist der Wirkungsgrad nur klein, und es ergeben sich thermische Probleme.

Aus der US-A-4 005 351 ist eine Schaltungsanordnung zur geregelten Speisung eines Verbrauchers aus Eingangsspannungsquellen unterschiedlicher Spannungen bekannt, bei der ein Sperrwandler benutzt wird, dessen Primärwicklung in Reihe mit einem Schalttransistor und einem Emitterwiderstand liegt. Eine Sekundärwicklung speist dabei den Verbraucher, und die Rückkopplung erfolgt über eine weitere Wicklung. An die Basis des Schalttransistors ist ein weiterer Transistor angeschlossen, an dessen Basis die am Emitterwiderstand abfallende Spannung über eine Diode anliegt. Die Einschaltdauer des Schalttransistors ist hierbei stark von der Eingangsspannung abhängig, d. h. die Schwingfrequenz des Sperrwandlers hängt sehr von der Eingangsspannung ab und wird bei steigender Eingangsspannung höher. Zur Kompensation dieses unerwünschten Verhältnisses ist eine relativ aufwendige Regelschaltung vorgesehen.

In der arm 2.7.81 veröffentlichten DE-A-29 49 421 ist eine Schaltungsanordnung beschrieben, bei der der Einfluß der Eingangsspannungen primärseitig direkt, also nicht auf dem Umweg über eine weitere Regelschaltung und eine Zeitverzögerung, dadurch berücksichtigt wird, daß dem über Emitterwiderstand fließenden Primärstrom ein weiterer Stromanteil hinzugzfügt wird, der der Eingangsspannung entspricht, beispielsweise direkt proportional ist. Der Primärstrom wird dann mit steigender Eingangsspannung früher, d. h. bei einem niedrigen Wert abgeschaltet, derart, daß die Ausgangsleistung eine vorbestimmte Abhängigkeit von der Eingangsspannung hat. Nachteilig ist bei dieser Schaltungsanordnung, daß die Stabilisierung des Ladestroms nicht sehr gut ist. Außerdem ist die Schaltungsanordnung empfindlich gegen Bauteiletoleranzen. Ferner ist sie nicht leerlauffest und besitzt keine Reserve für tiefentladene NC-Zellen.

Aus der DE-A-27 51 578 ist eine Schaltungsanordnung bekannt, bei welcher die an einem Emitterwiderstand abfallende Spannung benutzt wird, um bei Erreichen eines bestimmten Primärstroms abzuschalten. Zusätzlich wird eine Regelspannung aus einer weiteren Wicklung während der Sperrphase eines Wandlers gewonnen, die zusätzlich die Abschaltdauer beeinflußt, so daß eine bestimmte Kennlinie erzielt wird. Mit steigender Eingangsspannung wird die Rückkopplung stärker; was der Abschaltung durch den Primärstrom entgegenwirkt. Die nachgeordnete Regelschaltung muß daher zusätzlich auch noch den größeren Rückkopplungsstrom kompensieren.

In der europäischen Patentanmeldung 80 107 474.1 sowie der europäischen Patentanmeldung 80 106 836.2, die als Dokumente EP-A-30026 bzw. EP-A-30276 (entspricht der vorstehend schon gennanten DE-A-2 949 421) nachveröffentlicht wurden, jedoch unter Artikel 54 (3) EPÜ fallen, sind Sperrwandler zur Speisung eines Gleichstromverbrauchers mit konstantem Strom aus Eingangsgleichspannungsquellen unterschiedlicher Spannung beschrieben. Bei den Schaltungsanordnung ist ein Übertrager vorgesehen, dessen Primärwicklung, ggf. in Reihe zu einem Gleichrichter, in der Schaltstrecke eines ersten Transistors geschaltet ist, an dessen Emitter ein Emitterwiderstand angeschlossen ist. Die Sekundärwicklung des Übertragers ist in Reihe zu einem RC-Glied und der Schaltstrecke eines zweiten Transistors geschaltet, wobei die Basis des ersten Transistors an die Verbindung der Schaltstrecke des zweiten Transistors mit dem RC-Glied angeschlossen ist. Abhängig von dem durch die Primärwicklung des Übertragers fließenden Stromes und abhängig von der jeweils zugeführten Eingangs-Gleichspannung wird der Sperrwandler so gesteuert, daß der an den Verbraucher abgegebene Strom über einen weiten Eingangsspannungsbereich konstant ist. Der in der Sperrphase des Sperrwandlers in den Verbraucher, d. h. in den Akkumulator fließende Strom hängt vom Energieinhalt des Übertragers zum Beginn jeder Sperr- bzw. Durchlaßphase ab. Diese Schaltung stellt sicher, daß im Abschaltzeitpunkt immer der gleiche Energieinhalt in dem Übertrager vorhanden ist. Dies wird im wesentlichen dadurch bewirkt, daß mit dem Einschalten des in Reihe zur Primärwicklung geschalteten Transistors der durch die Primärwicklung fließende Strom linear ansteigt, bis über dem Emitterwiderstand eine Spannung anliegt, die im zweiten Transistor einen Basistrom fließen läßt, der den zweiten Transistor einschaltet und die Basis des ersten Transistor auf Bezugspotential zieht, so daß der erste Transistor sperrt und der durch die Primärwicklung des Übertragers fließende Strom linear abnimmt. Infolge der Verringerung des Magnetflusses im Kern des Übertragers polt sich die Spannung an der Sekundärwicklung um und der erste Transistor wird über das die Sekundärwicklung auf die Basis des ersten Transistor rückkoppelnde RC-Glied vollständig ausgeschaltet.

Eine Veränderung der Eingang-Gleichspannung bei einer Schaltung gemäß der EP-A-30026 bzw. EP-A-30276 führt jedoch zu einer entsprechenden umgekehrten Veränderung der Einschaltzeit des ersten Transistors, so daß bei einer konstanten Ausschaltzeit dies zu einer Erhöhung bzw. Erniedrigung der Schaltfrequenz und damit einer Vergrößerung bzw. Verkleinerung des Ladestromes führt.

Aus der GB-A-2 000 394 ist ein fremdgesteuerter Sperrwandler zum Betrieb eines Gleichstrommotors und zum Aufladen einer wiederaufladbaren Batterie bekannt, bie dem die Einflüsse der Eingangsspannung, des Ausgangsstromes und der Ausgangsspannung durch getrennte Schaltungselemente erfaßt und beim Wandlerbetrieb berücksichtig werden. zu diesem Zweck enthält der Sperrwandler einen von einem Impulsgenerator angesteuerten Schalttransistor, der in Reihe zur Primärwicklung eines Übertragers und einem Emitterwiderstand geschaltet ist, wobei die Reihenschaltung parallel zu einer speisenden Gleichspannungsquelle liegt. Die Sekundärwicklung des Übertragers ist an einen Verbraucher und über eine Diode mit einem das Bezugspotential für Eingangs- und Ausgangsspannung führenden Anschluß der Gleichspannungsquelle angeschlossen. Der bekannte Wandler ist so aufgebaut, daß der Spitzenwert des Primärstromes dem Effektivwert der Eingangsspannung angepaßt ist. Zu diesem Zweck ist eine Korrekturschaltung vorgesehen, die zwei parallel zur Reihenschaltung der Primärwicklung des Sperrwandlers und der Kollektor-Emitter-Strecke des Transistors geschaltete Widerstände enthält. Die Summe der Spannung über den einen der beiden Widerstände, die proportional zur gleichgerichteten Eingangsspannung ist, und der Spannung über dem Emitterwiderstand, die proportional zu dem durch den Transistor fließenden Strom ist, wird an eine Detektorschaltung gelegt, die in Abhängigkeit von der Eingangsspannung den Strom durch die Primärwicklung des Übertragers steuert.

Aus der US-A-4 131 843 ist ein selbstschwingender Sperrwandler bekannt, bei der ein Transistor in Reihe zur Primärwicklung eines Transformators geschaltet ist. Parallel zur Reihenschaltung der Basis-Emitter-Strecke des Transistors und eines Emitterwiderstandes ist eine Zenerdiode als Konstantspannungselement geschaltet, so daß der durch den Transistor fließende Strom nur so lange ansteigen kann, bis die Summe der Spannung über den Emitterwiderstand und des Basis-Emitter-Spannungsabfalls des Transistors der Zenerspannung der Zenerdiode gleicht, woraufhin der weitere Stromfluß begrenzt wird. Als Folge dieser Begrenzung nimmt die über eine Tertiärwicklung an der Basis des Transistors anliegende Rückkopplungsspannung ab, so daß der Transistor abschaltet und ein Impuls über die Sekundärwicklung abgegeben wird, wodurch eine konstante Ausgangsspannung erreicht wird.

Aus der Literaturstelle "Applikationsbuch Band 2" Verlag Texas Instruments Deutschland GmbH, 1978, Seiten 125 bis 135 ist eine Kompensationsschaltung für einen selbstschwingenden Sperrwandler bekannt, bei der eine an einem primärseitigen Spannungsteiler abgegriffene Steuerspannung an das Gate eines Thyristors angelegt wird. Da an den Spannungsteiler die Eingangsspannung angelegt wird, ergibt sich eine verhältnismäßig hohe Verlustleistung, die quadratisch mit der Eingangsspannung zunimmt.

Aufgabe der Erfindung ist es, eine Schaltungsanordnung zur geregelten Speisung eines Gleichstromverbrauchers aus Eingangsgleichspannungsquellen unterschiedlicher Spannung unter Verwendung eines selbstschwingenden Sperrwandlers mit einem Übertrager zu schaffen, der einen Gleichstromverbraucher geringerer Spannung mit einem konstanten Strom auch bei Schwankungen der Eingangsgleichspannung versorgt.

Diese Aufgabe wird erfindungsgemäß durch die Merkmale der Patentansprüche 1 und 4 gelöst.

Die erfindungsgemäßen Lösungen stellen sicher, daß bei gleicher Verbraucherspannung der Ladestrom für die Ladung eines Akkumulators hinsichtlich auch stark schwankenden Eingangsspannungen bzw. Spannungswerten am Eingang der Schaltungsanordnung konstant ist.

Dieser konstante Ladestrom ist insbesondere bei empfindlichen Nickel-Cadmium-Zellen von wesentlicher Bedeutung, die bei stark unterschiedlichen Ladeströmen frühzeitig zerstört werden können.

Bei Änderungen der Spannung am Akkumulator (Verbraucher) kann in bestimmten, in der Beschreibung näher ausgeführten Ausführungsbeispielen entweder der Ladestrom konstant gehalten oder aber bei ansteigender Spannung gesenkt werden.

Die verschiedenen Ausführungsformen der Erfindung erweisen sich als besonders leerlauffest, zeichnen sich im Betrieb durch eine nur geringe Erwärmung der einzelnen Bauteile aus und besitzen ohne zusätzlichen Aufwand bezüglich der zu verwendenden Bauteile eine genügende Schaltungsreserve für die extreme Belastung bei tiefentladenen Akkumulatoren.

Anhand von in der Zeichnung dargestellten Ausführungsbeispielen soll der Erfindung zugrundeliegende Gedanke näher erläutet werden. Es zeigen :

Figur 1 ein erstes Ausführungsbeispiel mit einem elektronischen Schalter, der mit einem seiner Lastanschlüsse an eine Anzapfung des Übertragers angeschlossen und mit seinem Steueranschluß mit einer Referenzspannung verbunden ist,

Figur 2 eine Variante der Schaltungsanordnung gemäß Figur 1, bei der eine als Verbraucher dienende, zu ladende Batterie mit ihrem positiven Anschluß mit dem Minuspol einer Referenzspannung verbunden ist,

Figur 3 ein zweites Ausführungsbeispiel mit einem über Widerstand an die Sekundärwicklung der Übertragers angeschlossenen steuerbaren Halbleiterschalters,

Figur 4 eine Variante der Schaltungsanordnung gemäß Figur 3.

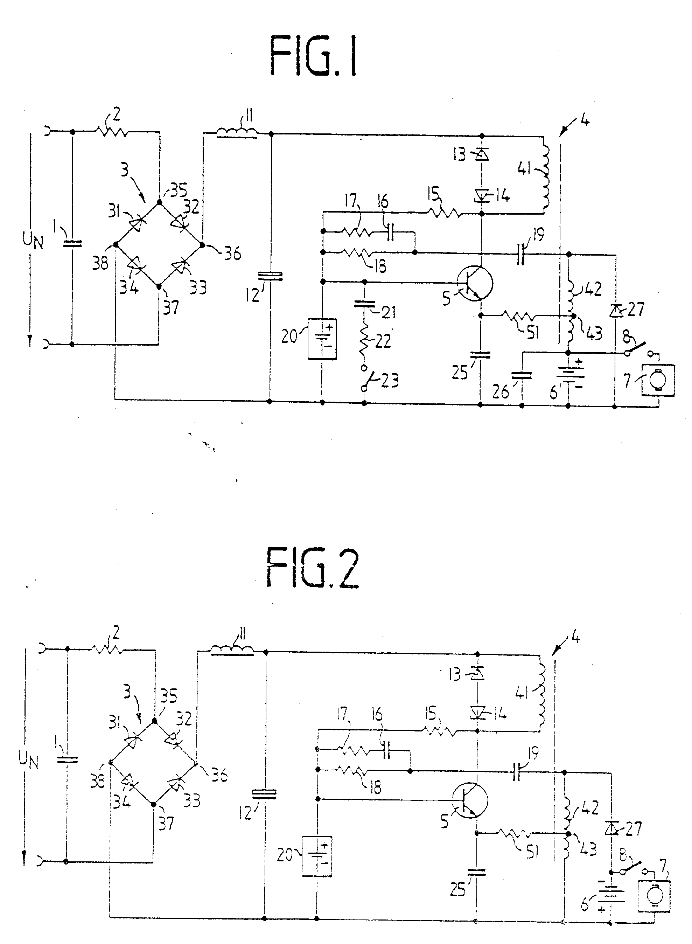

Das in Figur 1 dargestellte Ausführungsbeispiel zeigt einen parallel an eine Netzspannungsquelle $U_N$ geschalteten Kondensator 1 sowie eine über einen Begrenzungswiderstand 2 mit ihren Anschlüssen 35, 37 ebenfalls parallel an die Netzspannungsquelle $U_N$ angeschlossene Gleichrichterbrückenschaltung 3 mit vier Dioden 31, 32, 33, 34. Die Anschlüsse 36, 38 dieser Gleichrichterbrückenschaltung 3 sind an eine Reihen-Induktivität 11 und eine Parallelkondensator 12 angeschlossen, wobei die Anschlüsse 36, 38 eine Gleichspannungsquelle bilden, bei der der Anschluß 38 das Bezugspotential für die Eingangs- und Ausgangsspannung führt. An den Verbindungspunkt zwischen der Reiheninduktivität 11 und dem Parallel-Kondensator 12 ist die Kathode einer Diode 13 angeschlossen, deren Anode an der Anode einer Zenerdiode 14 liegt. Parallel zu der Reihenschaltung von Diode 13 und Zenerdiode 14 liegt die Primärwicklung 41 eines Übertragers 4, dessen Sekundärwicklung 42 mit seinem einen Ende an einem Kondensator 19 und mit seinem anderen Ende an einer Batterie 6 liegt. Parallel zur Batterie 6 ist ein Kondensator 26 geschaltet, wobei der Verbindungspunkt zwischen Batterie 6, Kondensator 26 und Sekundärwicklung 42 mit einem Schalter 8 verbunden ist, der einen Gleichstrommotor 7 o. dgl. parallel zur Batterie 6 anschließen kann.

Mit dem Verbindungspunkt zwischen Batterie 6 und Verbraucher 7 ist die Anode einer Diode 27 verbunden, deren Kathode an dem Verbindungspunkt zwischen Kondensator 19 und Sekundärwicklung 42 liegt. Der Verbindungspunkt zwischen der Kathode der Zenerdiode 14 und der Primärwicklung 41 ist mit dem Kollektor eines Transistors 5 verbunden, dessen Emitter an einem Emitterwiderstand 51 und an einem Kondensator 25 liegt und dessen Basis mit dem Pluspol einer Referenzspannung 20 verbunden ist. Parallel zur Referenzspannung 20 ist eine Reihenschaltung aus einem Kondensator 21, einem Widerstand 22 und einem Schalter 23 vorgesehen, wobei der Kondensator 21 mit der Basis des Transistors 5 und der Schalter 23 mit dem Minuspol der Referenzspannung 20 und den Kondensatoren 25, 26 verbunden ist.

Zwischen der Basis des Transistors 5 und dem an die Sekundärwicklung 42 angeschlossenen Kondensator 19 liegt eine Parallelschaltung, die in ihrem einen Zweig einen Widerstand 18 und in ihrem anderen Zweig einen Widerstand 17 und einen hierzu in Reihe geschalteten Kondensator 16 aufweist.

Ferner ist zwischen der Basis und dem Kollektor des Transistors 5 ein Widerstand 15 vorgesehen, der an die Primärwicklung 41 des Übertragers 4 angeschlossen ist.

Der mit dem Emitter des Transistors 5 verbundene Widerstand 51 ist mit einer Anzapfung 43 der Sekundärwicklung 42 des Übertragers 4 verbunden.

Die Funktionsweise der Schaltungsanordnung gemäß Figur 1 soll nachstehend im Zusammenhang mit der Funktionsweise der anschließend erläuterten Schaltungsanordnung gemäß Figur 2 näher erläutert werden.

Die in Figur 2 dargestellte Schaltungsanordnung entspricht weitestgehend der Schaltungsanordnung gemäß Figur 1, wobei gleiche Bezugsziffern gleiche Bauelemente bezeichnen, so daß nachstehend auf eine detaillierte Schaltungsbeschreibung verzichtet wird. Die Schaltungsanordnung gemäß Figur 2 unterscheidet sich von der Schaltungsanordnung gemäß Figur 1 im wesentlichen dadurch, daß die wahlweise als Verbraucher oder als Spannungsquelle dienende Batterie bzw. der Akkumulator 6 in Reihe zur Diode 27 geschaltet ist, wobei die Reihenschaltung parallel zur Sekundärwicklung 42 des Übertragers 4 liegt. Darüber hinaus weist die Schaltungsanordnung gemäß Figur 2 nicht die parallel zur Referenzspannung 20 geschaltete Reihenschaltung von Kondensator 21, Widerstand 22 und Schalter 23 sowie den parallel zum Akkumulator 6 geschalteten Kondensator 26 auf.

Die in den Figuren 1 und 2 gezeigten Schaltungsanordnungen können für verschiedende Funktionen eingesetzt werden. Bei geöffnetem Schalter 8 dienen sie als Ladeschaltung für die Batterie bzw. den Akkumulator 6, während sie bei geschlossenem Schalter 8 als Schaltnetzteil, beispielsweise für einen Gleichstrommotor eines Elektrorasiergerätes, dienen.

Die Wirkungsweise der Anordnung gemäß Figur 1 ist folgende : Nachdem die Netzspannung $U_N$, die innerhalb eines großen Bereichs schwanken kann, durch den Kondensator 1 entstört worden ist, wird sie über den Begrenzungswiderstand 2 der Gleichrichter-Brückenschaltung 3 zugeführt und von dieser gleichgerichtet. Die gleichgerichtete Spannung gelangt über die Reiheninduktivität 11 und den Parallelkondensator 12 auf das eigentliche Schaltnetzteil.

Der als steuerbarer Halbleiterschalter dienende Transistor 5 wird über die Primärwicklung 41 des Übertragers 4 und den als Anschwinghilfe dienenden Widerstand 15 leitend gemacht, wobei die Rückschlagspannungen an der Primärwicklung 41 durch die Diode 13 und die Zenerdiode 14 begrenzt werden.

Der Basisanschluß des Transistors 5 wird durch eine geeignete Referenzspannung, z. B. mittels einer Zenerdiode auf ein bestimmtes Spannungspotential beschränkt.

Wesentlich ist nun, daß der Emitter des Transistors 5 über den Widerstand 51 und einen Teil der Sekundärwicklung 42 mit dem Pluspol der Batterie 6 verbunden ist, wobei der Minuspol dieser Batterie 6 an Massepotential liegt.

In der Leitphase des Transistors 5 entsteht an dem Punkt 43 der Sekundärwicklung 42 ein der Netzspannung $U_N$ proportionaler Spannungsanstieg. Da nach dem Durchschalter des Transistors 5 über die Primärwicklung 41 und die Kollektor-Emitter-Strecke des Transistors 5 ein Strom über den Widerstand 51 und den unteren Teil der Sekundärwicklung 43 in die Batterie 6 fließt, reduziert sich dieser Strom aufgrund des Potentialanstiegs am Anzapfungspunkt 43. Die Reduzierung des Stromes erfolgt hierbei in dem Maße, daß bei unterschiedlicher Netzspannung $U_N$ die sekundär abgegebene Leistung konstant gehalten wird. Die Zeitabschnitte, in denen die am Kondensator liegende Spannung von dem Transistor 5 durchgeschaltet wird, werden somit nicht nur durch die äußere Beschaltung des Transistors 5 beeinflußt, sondern auch durch die Spannung am Kondensator 12 und damit durch die Netzspannung $U_N$, weil ein Teil dieser Spannung am Anzapfungspunkt 43 ansteht. Gleichzeitig beeinflußt diese Spannung den in die Batterie 6 fließenden Strom, weil von dem Emitter des Transistors 5 in die Batterie 6 nur ein solcher Strom gelangen kann, welcher der Spannungsdifferenz zwischen Batterie 6 und Emitter des Transistors 5 bzw. dem Widerstandswert des Widerstands 51 und dem unteren Teil der Sekundärwicklung 43 entspricht.

Die Regelung der Verbraucherspannung nach Fig. 1 bestimmt sich aus der nachstehenden Gleichung :

$$I_{51} = U_{20} - U_{BE(5)} - U_{43} - U_6)R_{51}$$

In dieser Gleichung bedeuten $I_{51}$ der durch den Widerstand 51 fließende Strom, $U_{20}$ die Spannung der Referenzspannung 20, $U_{BE(5)}$ die Basis-Emitter-Spannung des Transistors 5, $U_{43}$ die Spannung am unteren Abschnitt der Sekundärwicklung 42 zwischen der Anzapfung 43 und dem Anschluß der Batterie 6, $U_6$ die Spannung der Batterie 6 und $R_{51}$ der Widerstandswert des Widerstandes 51.

Die Regelung der Verbraucherspannung nach Fig. 2 bzw. des durch den an die Übertrager-Anzapfung 43 und den Emitter des Transistors 5 angeschlossenen Widerstandes 51 bestimmt sich aus der folgenden Gleichung

$$I_{51} = (U_{20} - U_{BE(5)} - U_{43})/R_{51}$$

wobei ebenfalls $I_{51}$ den durch den Widerstand 51 fließenden Strom darstellt, während $U_{20}$ die von der Referenzspannungs 20 abgegebene Spannung, $U_{BE(5)}$ die Basis-Emitter-Spannung des Transistors 5, $U_{43}$ die Spannung am unteren Abschnitt der Sekundärwicklung 42 des Übertragers 4 und $R_{51}$ den Widerstandswert des Widerstandes 51 bedeutet.

Durch die nach Fig. 1 im Emitterkreis des Transistors 5 liegende Batterie 6, die zur Versorgung eines Gleichstrommotors 7 dient, ergibt sich der Vorteil, daß bei ansteigender Batteriespannung — wenn beispielsweise die Batterie 6 voll geladen ist — gleichfalls der Emitterstrom gesenkt wird, d. h. der in der Batterie 6 fließende Ladestrom wird reduziert. Eine Erhöhung des sekundären Laststroms bzw. das Absinken der Spannung der Batterie 6 bewirkt eine Erhöhung der abgegebenen Sekundärleistung durch den Übertrager 4. Die Batterie 6 kann selbstverständlich auch durch einen größeren Kondensator, z. B. den Kondensator 26, ersetzt werden.

Soll eine Änderung der Batteriespannung ohne Auswirkung auf die abgegebene Sekundärleistung sein, so kann gemäß Fig. 2 der Fußpunkt der Referenzspannung 20 an den Pluspol der Batterie 6 gelegt werden.

Die Sekundärwicklung 42 dient auch als Rückkopplungswicklung, die über den Kondensator 19 und den Widerstand 18 die Basis des Transistors 5 ansteuert. Der Kondensator 19 und der Widerstand 18 dienen in der Sperrphase des Transistors 5 zum schnelleren Ausräumen der Ladungsträger in der Basis dieses Transistors 5.

Der Kondensator 25 blockt parasitäre Schwingungen ab, während der Kondensator 26 gemäß Figur 1 für eine bessere Überbrückung der Schaltfrequenz vom Pluspol der Batterie 6 nach Masse sorgt.

Mit dem Widerstand 22 und dem Kondensator 21 gemäß Figur 1 kann über den Schalter 23 bon einer Schnell-Ladung auf einen kleinen Erhaltungsstrom umgeschaltet werden.

Der Widerstand 22 dient hier nur zur Entkopplung. Der Kondensator 21 bildet mit dem Kondensator 19 bei Beendigung der Übertrager-Entladephase einen kapazitiven Spannungsteiler, so daß die Aufladung des Kondensators 19 über den Widerstand 15 bei einem niedrigen Spannungspotential beginnt. Die Zeit- und Sapnnungsdifferenz vom Beginn der Aufladung des Kondensators 19 bis zum Erreichen des Wiedereinschaltzeitpunktes des Transistors 5 ($U_{EIN} = U_{BATT.} + U_{BE}$) wird dadurch größer.

Bei der Schaltungsanordnung gemäß Figur 2 liegt der Pluspol der Batterie 6 nicht im Emitterkreis des Transistors 5, sondern an Masse. Bei einer Änderung der Netzspannung $U_N$ verhält sich die Schaltungsanordnung jedoch im Prinzip ebenso wie die Schaltungsanordnung gemäß Figur 1.

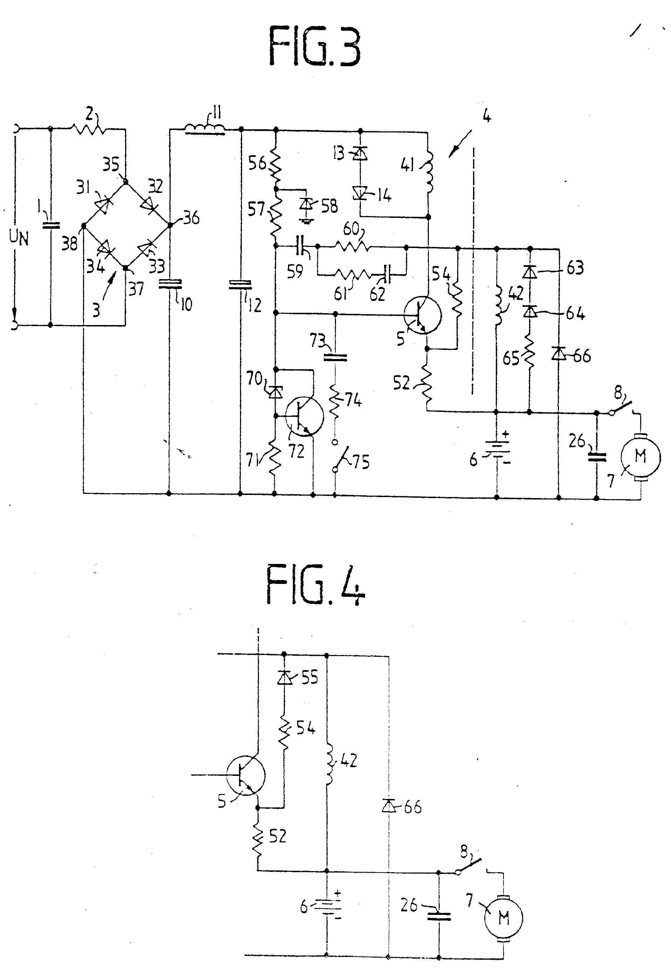

Das in Figur 3 dargestellte zweite Ausführungsbeispiel zeigt ebenfalls parallel zu den Klemmen einer Netzspannungsquelle $U_N$ einen Kondensator 1 sowie über einen Widerstand 2 eine Gleichrichterbrücke 3, die mit den Brückendiagonalen 35 an den Widerstand 2 bzw. 37 an die andere Klemme der Netzspannungsquelle $U_N$ angeschlossen ist. Die Gleichrichter-Brückenschaltung 3 weist in an sich bekannter Weise vier Dioden 31, 32, 33, 34 auf.

Mit den anderen Brückendiagonalen 36, 38 ist ein parallel geschalteter Glättungskondensator 10 und eine Glättungsinduktivität 11 verbunden. Der Reihenschaltung des Glättungskondensators 10 mit der Glättungsinduktivität 11 ist ein weiterer Kondensator 12 parallelgeschaltet. Parallel zu diesem weiteren Kondensator 12 ist die Reihenschaltung eines ersten Widerstandes 71 mit einer Zenerdiode 70 sowie zweier weiterer Widerstände 56, 57 vorgesehen. Während die Anode der Zenerdiode 70 mit der Basis eines weiteren Transistors 72 verbunden ist, ist die Kathode der Diode 70 mit einem Kondensator 59 verbunden, der in Reihe zu einer Parallelschaltung geschaltet ist, in deren ersten Zweig ein Widerstand 60 und in derem zweiten Zweig die Reihenschaltung eines weiteren Widerstandes 61 mit einem Kondensator 62 enthalten ist.

Die gesamte Parallelschaltung ist mit einem Widerstand 54 verbunden, der seinerseits mit dem Emitter des Transistors 5 verbunden ist. Der Emitter ist zusätzlich an einen Widerstand 52 angeschlossen, der am positiven Pol einer Batterie 6 liegt. Parallel zu dieser Batterie 6 sind ein Kondensator 26 und ein Gleichstrommotor 7 vorgesehen. Der Verbindungspunkt zwischen dem Widerstand 52 einerseits und der Batterie 6, dem Kondensator 26 und dem Gleichstrommotor 7 andererseits ist mit einem Widerstand 65 verbunden, der in Reihe zu zwei gleichsinnig gepolten Dioden 63, 64 geschaltet ist. Diese Reihenschaltung liegt parallel zur Sekundärwicklung 42 eines Übertragers 4, dessen Primärwicklung 41 einerseits mit dem Kollektor des Transistors 5 und andererseits mit der Induktivität 11 verbunden ist. Parallel zur Primärwicklung 41 liegen eine Diode 13 und eine mit dieser in Reihe geschaltete gegensinnig gepolte Zenerdiode 14. Die Kathode der Diode 13 und die der Zenerdiode 14 sind jeweils mit einem Ende der Primärwicklung 41 verbunden. Die Basis des Transistors 5 kann über einen Kondensator 73, einen Widerstand 74 und einen Schalter 75 mit dem negativen Pol der Batterie 6 verbunden werden. Dieser negative Pol der Batterie 6 ist zusätzlich über eine Diode 66 mit der Kathode der Diode 63 verbunden, die vorteilhafterweise als Leuchtdiode ausgebildet ist.

Parallel zur Batterie 6 ist über einen Schalter 8 ein elektrischer Verbraucher 7 in Form eines Gleichstrommotors vorgesehen. Dieser Gleichstrommotor 7 kann somit wahlweise direkt aus der oben beschriebenen Schaltungsanordnung oder aus der Batterie 6 gespeist werden.

In Figur 4 ist eine Schaltungsanordnung dargestellt, die einen Teilbereich der Schaltungsanordnung gemäß Figur 3 zeigt, wobei in diesem Teilbereich einige Änderungen vorgenommen sind. Anstelle der beiden Dioden 63, 64 und des Widerstandes 65 in Figur 3 ist in Figur 4 nur eine dem Widerstand 54 vorgeschaltete Leuchdiode 55 vorgesehen.

Die in den Figuren 3 und 4 gezeigten Schaltungsanordnungen können für verschiedene Funktionen eingesetzt werden. Bei geöffnetem Schalter 8 und geschlossenem Schalter 75 dienen sie als Ladeschaltungen für die Batterie 6, während sie bei geschlossenem Schalter 8 als Schaltnetzteil für den Verbraucher 7 dienen, der beispielsweise ein Gleichstrommotor eines Elektrorasiergerätes sein kann.

Die Wirkungsweise der Schaltungsanordnung gemäß Figur 3 ist folgende :
Nachdem die Netzspannung $U_N$, die innerhalb eines großen Bereiches schwanken kann, durch den Glättungskondensator 1 entstört worden ist, wird sie über den Begrenzungswiderstand 2 der Gleichrichter-Brückenschaltung 3 zugeführt und von gleichgerichtet. Die gleichgerichtete Spannung gelangt nun über die Induktivität 11 und den Kondensator 12 auf das eigentliche Schaltnetzteil.

Der Transistor 5 wird über die Primärwicklung 41 und den als Anschwinghilfe dienenden Widerstand 56 leitend gemacht, wobei die Rückschlagspannung an der Primärwicklung 41 durch die Diode 13 und die gegensinnig gepolte Zenerdiode 14 begrenzt wird.

Der Basisanschluß des Transistors 5 wird durch eine als Referenzspannung dienende Zenerdiode 70 auf ein bestimmtes Spannungspotential beschränkt.

Wesentlich ist nun, daß der Emitter des Transistors 5 über den Widerstand 54 mit einem Anschluß der Sekundärwicklung 42 und über den Widerstand 52 mit dem Pluspol der Batterie 6 verbunden ist.

In der Leitphase des Transistors 5 entsteht an dem Verbindungspunkt zwischen dem Widerstand 54 und der Sekundärwicklung 42 ein der Netzspannung $U_N$ proportionaler Spannungsantieg. Da nach dem Durchschalten des Transistors 5 über die Primärwicklung 41 und die Kollektor-Emitter-Strecke des Transistors 5 ein Strom über den Widerstand 52 in die Batterie 6 fließt, reduziert sich dieser Strom aufgrund des Potentialanstiegs am Verbindungspunkt zwischen dem Widerstand 54 und der Sekundärwicklung 42. Die Reduzierung des Stroms erfolgt hierbei in einem solchen Maße, daß bei unterschiedlichen Netzspannungen $U_N$ die sekundär abgegebene Leistung konstant gehalten wird.

Die Zeitabschnitte, in denen die am Kondensator 12 liegende Spannung von dem Transistor 5 durchgeschaltet wird, werden somit nicht nur durch die äußere Beschaltung des Transistors 5 beeinflußt, sondern auch durch die Spannung am Kondensator 12 und damit durch die Netzspannung $U_N$, weil ein Teil dieser Spannung am Verbindungspunkt zwischen dem Widerstand 54 und der Sekundärwicklung 42 ansteht. Gleichzeitig beeinflußt diese Spannung den in die Batterie 6 fließenden Strom, weil von dem Emitter des Transistors 5 in die Batterie 6 nur ein solcher Strom gelangen kann, welcher der Spannungsdifferenz zwischen der Batterie 6 und dem Emitter bzw. dem Widerstandswert des Widerstands 52 entspricht.

Die Spannungsregelung in der Schaltungsanordnung gemäß Figur 3 kann rechnerisch durch den im Emitterwiderstand 52 fließenden Strom dargestellt werden :

$$I_{52} = U_{70} - U_{BE5} - U_{BATT6}/R_{52}$$

wobei $I_{52}$ den durch den Widerstand 52 fließenden Strom beinhaltet, $U_{70}$ die Referenzspannung an der Zenerdiode 70, $U_{BE5}$ den Basis-Emitter-Spannungsabfall am Transistor 5, $U_{BATT6}$ die Spannung der Batterie 6 und $R_{52}$ den Widerstandswert des Emitterwiderstand 52 bedeutet.

Durch die im Emitterkreis des Transistors 5 liegende Batterie 6, die zur Versorgung des Gleichstrommotors 7 dient, ergibt sich der Vorteil, daß bei ansteigender Batteriespannung — wenn beispielsweise die Batterie 6 noch geladen ist — gleichfalls der Emitterstrom gesenkt wird, d. n. der in die Batterie 6 fließende Ladestrom wird reduziert. Eine Erhöhung des sekundaren Ladestroms bzw. das Absinken der Spannung der Batterie 6 bewirkt eine Erhöhung der abgegebenen Sekundärleistung durch den Übertrager 4. Die Batterie 6 kann selbstverständlich auch durch eine größeren Kondensator, z. B. den Kondensator 26, ersetzt werden.

Soll eine Änderung der Batteriespannung ohne Auswirkung auf die abgegebene Sekundärleistung sein, so kann der Fußpunkt der Referenzspannungsquelle 70, 71, 72 an den Pluspol der Batterie 6 gelegt werden.

Die Sekundärwicklung 42 dient auch als Rückkopplungswicklung, die über das Netzwerk 59, 60, 61, 62 die Basis des Transistors 5 ansteuert. Der Kondensator 26 sorgt für eine bessere Überbrückung der Schaltfrequenz vom Pluspol der Batterie 6 nach Masse.

Mit dem Widerstand 74 und dem Kondensator 73 kann über den Schalter 75 von einer Schnell-Ladung auf einen kleiner Erhaltungsstrom umgeschaltet werden. Der Widerstand 74 dient hier nur zur Entkopplung. Der Kondensator 73 bildet mit dem Kondensator 59 des Netzwerks bei Beendigung der Übertragerentladung einen kapazitiven Spannungsteiler, so daß die Aufladung des Kondensators 59 über den Widerstand 56, 57 bereits von einem niedrigen Spannungspotential an beginnt. Die Zeit- und Spannungsdifferenz vom Beginn der Aufladung des Kondensators 59 bis zum Erreichen des Wiedereinschaltpunktes des Transistors 5 ($U_{EIN} = U_{BATT}$ + $U_{BE}$) wird dadurch größer.

Die Leuchtdiode 63 leuchtet in der Ladephase der Batterie 6 auf, d. h. wenn an der Sekundärwicklung 42 eine Spannung anliegt. Der Widerstand 65 wirkt hierbei als Strombegrenzung.

In der Figur 4 ist eine Schaltungsanordnung gezeigt, bei der die Leuchtdiode 55 in Reihe zum Widerstand 54 liegt. Hier übernimmt der Widerstand 54 die Funktion des Strombegrenzers.


**Patentansprüche**


1. Schaltungsanordnung zur geregelten Speisung eines Gleichstromverbrauchers (6, 7) geringerer Verbraucherspannung mit konstantem Strom aus Eingangsspannungsquellen unterschiedlicher Spannung unter Verwendung eines selbstschwingenden Sperrwandlers mit einem Übertrager (4), dessen Primärwicklung (41) zwischen einem Anschluß der Eingangsgleichspannungsquelle und dem Kollektor eines Transistors (5) leigt und dessen Sekundärwicklung (42) über eine RC-Schaltung (16 bis 19) auf die Basis des Transistors (5) rückgekoppelt und parallel zu einer Reihenschaltung aus einer Diode (27) und dem Verbraucher (6, 7) geschaltet ist, wobei der Verbraucher mit dem anderen Anschluß der Gleichspannungsquelle verbunden ist, der das Bezugspotential für Eingangs- und Ausgangsspannung führt, ferner der Emitter des Transistors (5) über einen Emitterwiderstand (51) mit einer Anzapfung (43) der Sekundärwicklung (42) des Übertragers (4) verbunden ist und die Basisspannung des Transistors (5) durch eine mittels einer Zenerdiode (70) erzeugte Referenzspannung gegenüber dem Bezugspotential beschränkt wird (Fig. 1 und 2).

2. Schaltungsanordnung nach Anspruch 1, wobei der Emitter des Transistors (5) über einen Kondensator (25) mit dem Minuspol einer durch die Schaltungsanordnung zu ladenden Batterie (6) verbunden ist, die zwischen der Sekundärwicklung (42) des Übertragers (4) und dem Bezugspotential liegt (Fig. 1).

3. Schaltungsanordnung nach Anspruch 1 oder 2, wobei die RC-Schaltung aus einem Kondensator (19) und einer Parallelschaltung aus einem ersten Widerstand (18) mit der Reihenschaltung eines zweiten Widerstandes (17) und eines Kondensators (16) besteht (Fig. 1 und 2).

4. Schaltungsanordnung zur geregelten Speisung eines Gleichstromverbrauchers (6, 7) geringerer Verbraucherspannung mit konstantem Strom aus Eingangsspannungsquellen unterschiedlicher Spannung unter Verwendung eines selbstschwingenden Sperrwandlers mit einem Übertrager (4), dessen Primärwicklung (41) zwischen einem Anschluß der Eingangsgleichspannungsquelle und dem Kollektor eines Transistors (5) liegt und dessen Sekundärwicklung (42) über eine RC-Schaltung (59 bis 62) auf die Basis des Transistors (5) rückgekoppelt und parallel zu einer Reihenschaltung aus einer Diode (66) und dem Verbraucher (6, 7) geschaltet ist, wobei der Verbraucher mit dem anderen Anschluß der Gleichspannungsquelle verbunden ist, der das Bezugspotential für Eingangs- und Ausgangsspannung führt, wobei in Widerstand (54) zwischen dem Verbindungspunkt des Emitters des Transistors (5) mit einem an den Verbraucher (6) angeschlossenen Emitterwiderstand (52) und dem mit der RC-Schaltung (59-62) verbundenen Ende der Sekundärwicklung (42) des Übertragers (4) liegt und die Basisspannung des Transistors (5) durch eine mittels einer Zenerdiode (70) erzeugten Referenzspannung gegenüber dem Bezugspotential beschränkt wird (Fig. 3 und 4).

5. Schaltungsanordnung nach den Ansprüchen 1 oder 4, wobei die Basis des Transistors (5) über einen Kondensator (21, 73), einen Widerstand (22, 74) und einen Schalter (23, 75) an das Bezugspotential anschließbar ist (Fig. 1 bis 3).

6. Schaltungsanordnung nach Anspruch 4, wobei die Sekundärwicklung (42) durch die Reihenschaltung einer Leuchtdiode (63), einer Diode (64) und eines Widerstandes (65) überbrückt ist und zwischen der Sekundärwicklung (42) und dem Bezugspotential die durch die Sthaltungsanordnung zu ladende Batterie (6) lieht (Fig. 3).

7. Schaltungsanordnung nach Anspruch 4, wobei der Emitter des Transistors (5) über eine in Reihe zum Widerstand (54) liegende Leuchtdiode (55) mit dem Ende der Sekundärwicklung (42) des übertragers (4) verbunden ist (Fig. 4).

## Claims

1. Circuit arrangement for the controlled supply of a direct current load (6, 7) of low load voltage with constant current from input voltage sources having different voltages, accompanied by the use of a self-oscillating flyback converter with a transformer (4) whose primary winding (41) is connected between a terminal of the input d.c. voltage source and the collector of a transistor (5) and whose secondary winding (42) is fed back via an R-C circuit (16 to 19) to the base of the transistor (5) and is connected in parallel with a series circuit consisting of a diode (27) and the load (6, 7), wherein the load is connected to the other terminal of the d.c. voltage source which carries the reference potential for the input and output voltage, furthermore the emitter of the transistor (5) is connected via an emitter resistor (51) to a tapping point (43) of the secondary winding (42) of the transformer (4) and the base voltage of the transistor (5) is restricted relative to the reference potential by a reference voltage generated by a Zener diode (70) (Figures 1 and 2).

2. Circuit arrangement according to Claim 1, wherein the emitter of the transistor (5) is connected via a capacitor (25) to the negative pole of a battery (6) which is to be charged by the circuit arrangement and is located between the secondary winding (42) of the transformer (4) and the reference potential (Figure 1).

3. Circuit arrangement according to Claim 1 or 2, wherein the R-C circuit consists of a capacitor (19) and a parallel circuit consists of a first resistor (18) with the series circuit of a second resistor (17) and a capacitor (16) (Figures 1 and 2).

4. Circuit arrangement for the controlled supply of a direct current load (6, 7) of low load voltage with constant current from input voltage sources having different voltages, accompanied by the use of a self-oscillating flyback converter with a transformer (4) whose primary winding (41) is connected between a terminal of the input d.c. voltage source and the collector of a transistor (5) and whose secondary winding (42) is fed back via an R-C circuit (59 to 62) to the base of the transistor (5) and is connected in parallel with a series circuit of a diode (66) and the load (6, 7), wherein the load is connected to the other terminal of the d.c. voltage source which carries the reference potential for the input and output voltage, a resistor (54) being located between the junction of the emitter of the transistor (5) to an emitter resistor (52) connected to the load (6) and the end of the secondary winding (42) of the transformer (4) connected to the R-C circuit (59 to 62) and the base voltage of the transistor (5) being restricted relative to the reference potential by a reference voltage generated by a Zener diode (70) (Figures 3 and 4).

5. Circuit arrangement according to Claims 1 or 4, wherein the base of the transistor (5) can be connected to the reference potential via a capacitor (21, 73), a resistor (22, 74) and a switch (23, 75) (Figures 1 to 3).

6. Circuit arrangement according to Claim 4, wherein the secondary winding (42) is bridged by the series connection of a light-emitting diode (63), a diode (64) and a resistor (65) and the battery (6) to be charged by the circuit arrangement is positioned between the secondary winding (42) and the reference potential (Figure 3).

7. Circuit arrangement according to Claim 4, wherein the emitter of the transistor (5) is connected via a light-emitting diode (55) in series with the resistor (54) to the end of the secondary winding (42) of the transformer (4) (Figure 4).

**Revendications**

1. Circuit pour l'alimentation régulée d'un récepteur à courant continu (6, 7) de faible tension de consommation par un courant constant provenant de sources de tension continue d'entrée différentes, avec utilisation d'un convertisseur-inverseur auto-oscillant à transformateur (4) dont l'enroulement primaire (41) est branché entre une borne de la source de tension continue d'entrée et le collecteur d'un transistor (5) et dont l'enroulement secondaire (42) est ramené sur la base du transistor (5) par un élément RC (16 à 19) et est branché en parallèle à un montage en série constitué par une diode (27) et le récepteur (6, 7), le récepteur étant relié à la seconde borne de la source de tension continue, portée au potentiel de référence des tensions d'entrée et de sortie, l'émetteur du transistor (5) est relié par une résistance d'émetteur (51) à une borne (43) de l'enroulement secondaire (42) du transformateur (4) et la tension de base du transistor (5) est limitée par rapport au potentiel de référence par une tension de référence produite au moyen d'une diode Zener (70) (figures 1 et 2).

2. Circuit selon la revendication 1, caractérisé en ce que l'émetteur du transistor (5) est relié par un condensateur (25) à la borne négative d'une batterie (6) à charger par le circuit qui est insérée entre l'enroulement secondaire (42) du transformateur (4) et le potentiel de référence (figure 1).

3. Circuit selon la revendication 1 ou 2, caractérisé en ce que le circuit RC est constitué par un condensateur (19) et un montage en paralléle d'une première résistance (18) avec le montage en série d'une seconde résistance (17) et d'un condensateur (16) (figures 1 et 2).

4. Circuit pour l'alimentation régulée d'un récepteur à courant continu (6, 7) de faible tension de consommation par un courant constant provenant de sources de tension continue d'entrée différentes, avec utilisation d'un convertisseur-inverseur auto-oscillant à transformateur (4) dont l'enroulement primaire (41) est branché entre une borne de la source de tension continue d'entrée et le collecteur d'un transistor (5) et dont l'enroulement secondaire (42) est ramené sur la base du transistor (5) par un élément RC (59 à 62) et est branché en parallèle à un montage en série constitué par une diode (66) et le récepteur (6, 7), le récepteur étant relié à la seconde borne de la source de tension continue, portée au potentiel de référence des tensions d'entrée et de sortie, une résistance (54) étant située entre le point de connexion de l'émetteur du transistor (5) avec une résistance d'émetteur (52) reliée au récepteur (6) et l'extrémité de l'enroulement secondaire (42) du transformateur (4) qui est reliée au circuit RC (59-62), et la tension de base du transistor (5) est limitée par rapport au potentiel de référence par une tension de référence produite au moyen d'une diode Zener (70) (figures 3 et 4).

5. Circuit selon les revendications 1 ou 4, caractérisé en ce que la base du transistor (5) peut être reliée au potentiel de référence par un condensateur (21, 73), une résistance (22, 74) et un interrupteur (23, 75) (figures 1 à 3).

6. Circuit selon la revendication 4, caractérisé en ce que l'enroulement secondaire (42) est shunté par le montage en série d'une diode électroluminescente (63), d'une diode (64) et d'une résistance (65) ; et une batterie (6) à charger par le circuit est insérée entre l'enroulement secondaire (42) et le potentiel de référence (figure 3).

7. Circuit selon la revendication 4, caractérisé en ce que l'émetteur du transistor (5) est relié à l'extrémité de l'enroulement secondaire (42) du transformateur (4) par une diode électroluminescente (55) en série avec la résistance (54) (figure 4).

EP 0 057 910 B2

# FIG.1

# FIG.2

# FIG.3

# FIG.4